# EUROPÄISCHE PATENTSCHRIFT

(11) **EP 0 391 990 B1**
(45) Veröffentlichungstag und Bekanntmachung des Hinweises auf die Patenterteilung: **13.10.1993**
(21) Anmeldenummer: 89909531.9
(22) Anmeldetag: 05.09.1989
(51) Int. Cl.: B01D 53/34, C01C 1/12

(54) **VERFAHREN UND ANLAGE ZUR RÜCKGEWINNUNG VON AMMONIAK AUS RAUCHGASEN**
PROCESS AND INSTALLATION FOR RECOVERING AMMONIA FROM FLUE GASES
PROCEDE ET INSTALLATION DE RECUPERATION DE L'AMMONIAC CONTENU DANS DES GAZ DE FUMEE

(30) Priorität: 08.09.1988 CH 3365/88
(43) Veröffentlichungstag der Anmeldung: 17.10.1990
(73) Patentinhaber: VON ROLL AG, 4563 Gerlafingen (CH)
(72) Erfinder: RÜEGG, Hans, CH-5610 Wohlen (CH); VOCK, René, CH-8906 Bonstetten (CH)
(74) Vertreter: Wagner, Wolfgang, Dr. Phil., Dipl.-Phys.
(86) Internationale Anmeldenummer: CH8900163
(87) Internationale Veröffentlichungsnummer: WO9002600

(56) Entgegenhaltungen:
- EP-A- 0 056 246
- EP-A- 0 264 041
- EP-A- 0 309 742

## Beschreibung

Die Erfindung betrifft ein Verfahren zur Rückgewinnung von Ammoniak beim Abscheiden von Stickoxyden aus den bei der Verbrennung von Materialien, insbesondere von fossilen Brennstoffen, in einer Feuerungsanlage entstehenden Rauchgasen, wobei in einer Reaktionszone in den Rauchgasstrom ein reduzierendes Gas, vorzugsweise Ammoniak, eingeleitet wird, durch welches die Stickoxydgase zu elementarem Stickstoff reduziert werden, worauf der Rauchgasstrom einer Nass-Wäsche unterworfen wird, welche nach der Reaktionsphase durchgeführt wird, wobei durch das Waschwasser das nichtreagierte, als Schlupf bezeichnete Ammoniak bzw. Ammoniumsalze entfernt wird bzw. werden und anschliessend der pH-Wert des Waschwassers, welches bei der Nasswäsche der Rauchgase durch Ammoniak und Ammonium angereichert wird, durch Einführung einer Lauge auf mehr als 9,5 angehoben wird.

Ein Verfahren der vorstehend beschriebenen Art ist aus EP-A-264 041 der Anmelderin bekannt. Bei diesem Verfahren wird das im Waschwasser gelöste Ammoniak in einem weiteren Verfahrensschritt desorbiert und als Gas aus dem Waschwasser ausgetrieben. Dazu wird in einer Strippkolonne durch eingeführte Luft ein inniger Kontakt zwischen dem Waschwasser und der Luft herbeigeführt, wodurch das Ammoniak aus dem Waschwasser in die Luft übergeführt werden kann. Dieses Luft-Ammoniak-Gemisch kann dann wieder als Verbrennungsluft in die Feuerungsanlage, beispielsweise als Sekundärluft bei Müllverbrennungsanlagen, in die Rauchgase eingeleitet werden.

Dieses Verfahren geht von der Ueberlegung aus, dass die Reduktion der Stickoxyde in Rauchgasen durch die Einleitung von Ammoniakgas in die Rauchgase, wie dies bei dem bekannten SNCR-Verfahren (EP-A-79 171) oder bei dem bekannten SCR-Verfahren (US-A-3 970 739) Anwendung findet, dadurch verbessert werden kann, wenn es gelingt, bei Steigerung des Abscheidegrades den nichtreagierenden Ammoniakanteil verkleinern zu können. Nach dem bekannten Verfahren gelingt dies dadurch, dass die Rauchgase einer Nasswäsche unterzogen werden und der pH-Wert des mit Ammoniumionen angereicherten Waschwassers, beispielweise durch Zufügung von Kalk, auf einen Wert von grösser als 10 angehoben wird, wodurch das im Waschwasser des Nasswäschers absorbierte und gelöste NH₄⁺-Ion durch diese Neutralisation zu freien, physikalisch gebundenen Ammoniak NH₃ umgesetzt wird. Das aus der Strippkolonne austretende und mit Luft gemischte freie Ammoniak wird von einem Gebläse angesaugt und, mit Umgebungsluft vermischt, als Sekundärluft in den Kessel eingeblasen.

Mit diesem Verfahren kann zwar ein hoher Stickoxyd-Abscheidegrad bei gleichzeitig niedrigerem Ammoniakverbrauch erreicht werden, jedoch bringt es das Verfahren mit sich, dass das wiedergewonnene Ammoniak nur teilweise für die Reduktion der Stickoxyde wiederverwendet werden kann. Dies trifft dann zu, wenn die Verbrennungsanlage überhaupt mit Luft betrieben wird und wenn diese Sekundärluft an einer Stelle einer Sekundärlufteindüsung zugeführt wird, wo möglichst Temperaturen unter 1000° C vorliegen. Dabei ist es durch das hohe Sauerstoffangebot nach der Sekundärluft-Eindüsestelle nicht zu vermeiden, dass trotzdem ein grosser Teil des Ammoniaks verbrennt. Liegen die Temperaturen noch höher, kann das gesamte Ammoniak verbrennen, wodurch zusätzliche Stickoxyde erzeugt werden, mit denen die Rauchgase zusätzlich befrachtet werden.

Hier setzt die Erfindung ein, der die Aufgabe zugrundeliegt, das Verfahren der eingangs beschriebenen Art so weiter auszugestalten, dass ein hoher Stickoxyd-Abscheidegrad bei zusätzlich vermindertem Ammoniakverbrauch erreicht wird.

Diese Aufgabe wird gemäss der Erfindung dadurch gelöst, dass das Ammoniak durch Strippen mit Wasserdampf aus dem Waschwasser desorbiert wird und das desorbierte Gemisch in die Reduktionszone der Feuerungsanlage eingeleitet wird.

Dadurch wird das hohe Sauerstoffangebot, das bei Eindüsung mit Sekundärluft gegeben ist, vermieden und ein Verbrennen von Ammoniak weitgehend unterbunden. Ausserdem kann, da die Eindüsung unabhängig von der Sekundärluft erfolgt, dafür eine Stelle tieferer Temperatur gewählt werden als sie gewöhnlich an den Stellen, an denen Sekundärluft eingeleitet wird, herrscht.

Zweckmässig wird das aus dem Waschwasser desobierte Gemisch Wasserdampf/Ammoniak kondensiert und das als Salmiakgeist anfallende Kondensat in die Reduktionszone der Feuerungsanlage eingeleitet.

Die Erfindung betrifft auch einen Feuerungsanlage mit einem Ofen, einem Kessel und einer Nass-Waschanlage für die Rauchgase zur Rückgewinnung von Ammoniak beim Abscheiden von Stickoxyden aus der bei der Verbrennung von fossilen Brennstoffen und anderen Materialien entstehenden Rauchgasen, wobei die Aufgabe dieser Anlage die Ermöglichung einer optimalen Rückgewinnung von Ammoniak beim Abscheiden von Stickoxyden aus den Rauchgasen und eine Verringerung des hiefür benötigten Reduktionsmittels ist.

Diese Aufgabe wird gemäss der Erfindung dadurch gelöst, dass im Ofen bzw. Kessel oder in der Austrittsleitung des Kessels eine

Zuleitung zur Einleitung von Salmiakgeist in den Rauchgasstrom vorgesehen ist, wobei eine dieser Zuleitung nachgeschaltete Nass-Waschanlage für die Rauchgase durch eine Verbindungsleitung mit einer Strippkolonne verbunden ist, in welcher eine Zuleitung für Wasserdampf mündet und eine Austrittsleitung für ein Gemisch Wasserdampf/Ammoniak angeschlossen ist, wobei diese Austrittsleitung in die Zuleitung zur Einleitung von Salmiakgeist mündet.

Zweckmässig ist in der Austrittsleitung zwischen der Strippkolonne und der Zuleitung zur Einleitung von frischem Salmiakgeist zum Ofen ein Kondensator eingeschaltet.

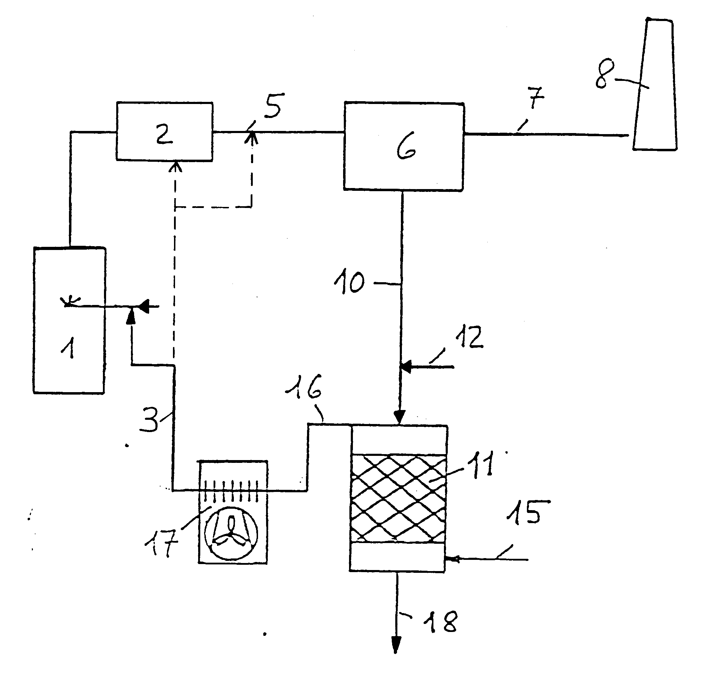

Ein Ausführungsbeispiel einer Anlage gemäss der Erfindung ist in der Zeichnung schematisch dargestellt und nachfolgend beschrieben. Die Figur zeigt die für eine solche Anlage benötigten Komponenten und Verbindungen in Blockdiagramm-Darstellung.

Die in der Figur dargestellte Anlage weist einen Ofen 1 auf, an welchen ein Kessel 2 angeschlossen ist. In den Ofen 1 mündet eine Zuleitung 3, durch welche Salmiakgeist, eine wässrige Lösung von Ammoniak (NH₃), in den Rauchgasstrom eingeleitet wird. Die Zuleitung 3 kann jedoch auch am Kessel 2 münden. Wesentlich ist, dass die Zuleitung dort angeordnet ist, wo die Rauchgastemperatur nicht zu hoch ist, wobei sonst das Ammoniak mindestens teilweise verbrannt wird und dadurch zusätzliches Stickoxyd liefert. Die optimale Temperatur liegt unterhalb 1000°C. Eine aus dem Kessel 2 führende Austrittsleitung 5 mündet in eine Nass-Waschanlage für die Rauchgase. Da ein hoher Stickoxyd-Abscheidungsgrad nur durch eine überstöchiometrische Zugabe an Ammoniak erreicht wird, bildet das überschüssige Ammoniak einen verhältnismässig hohen Schlupf. Dieses Ammoniak wird in der Nass-Waschanlage ausgewaschen, wo es in dem sauren Waschwasser sofort in seine ionisierte Form NH₄⁺ übergeht. Ein Rest des überschüssigen Ammoniak geht mit den Rauchgasen von der Nass-Waschanlage 6 durch eine Leitung 7 in ein Kamin 8. Gegebenenfalls muss für diesen Teil der Rauchgase eine spezielle Abscheidestufe vorgesehen werden.

Das im Waschwasser enthaltene Ammoniak-Ion wird über eine Verbindungsleitung 10 einer Strippkolonne 11 zugeführt. In der Verbindungsleitung 10 mündet eine Zuleitung 12, durch welche dem Waschwasser eine Lauge, beispielsweise Kalkmilch Ca(OH)₂, zudosiert wird.

In der Strippkolonne 11 wird das auf pH grösser 9,5 ein gestellte Waschwasser bis zum Siedepunkt mittels Wasserdampf aufgeheizt, welcher durch eine Dampf-Zuleitung 15 in die Strippkolonne 11 eingeleitet wird. Bei zusätzlicher Zufuhr von Wasserdampf bildet dasselbe ein Trägermedium für das Ammoniak, wobei das hierbei entstehende Gemisch Wasserdampf/Ammoniak in der Strippkolonne 11 aufsteigt und am obern Ende derselben durch eine Gemischleitung 16 abgeleitet und einem Kondensator 17, beispielsweise einem Luftkondensator, zugeführt wird, wo das Gemisch wieder in den flüssigen Aggregatszustand übergeführt wird. Das Kondensat, ein Salmiakgeist, der je nach der Stickoxyd-Reduktion in den Rauchgasen etwa 10 - 50% (Gew.) der zu der Entstickung der Rauchgase erforderlichen Ammoniak-Menge beinhaltet, wird in die Zuleitung 3 eingeleitet, d.h. an derselben Stelle, wo der frisch zugeleitete Salmiakgeist in den Feuerraum des Ofens 1, in den Kessel 2 oder in die Austrittsleitung 5 des Kessels 2 zudosiert wird.

Durch die beschriebene Anlage gelingt es, dass das zurückgewonnene Ammoniak nicht wie bei der eingangs beschriebenen bekannten Anlage zum grossten Teil verbrannt, sondern praktisch vollstandig für die Verringerung des Verbrauchs an Salmiakgeist verwendet werden kann.
Die in der Figur schematisch dargestellte Anlage ist unter der Voraussetzung zusammengestellt, dass sie mit dem SNCR-Verfahren benützt wird. Selbstverständlich ist es auch möglich, die Ammoniak-Rückgewinnung in der vorstehend beschriebenen Art bei einer Anlage nach dem SCR-Verfahren anzuwenden.

## Patentansprüche

1. Verfahren für die Rückgewinnung von Ammoniak beim Abscheiden von Stickoxyden (NOₓ) aus den bei der Verbrennung von Materialien, insbesondere von fossile*n* Brennstoffen in einer Feuerungsanlage entstehenden Rauchgase, wobei in einer Reaktionszone in dem Rauchgasstrom Ammoniak (NH₃) eingeleitet wird, durch welches die Stickoxydgase zu elementarem Stickstoff (N₂) reduziert werden, worauf der Rauchgasstrom einer Nass-Wäsche unterworfen wird, welche nach der Reaktionsphase durchgefuhrt wird, wobei durch das Waschwasser das nichtreagierte Ammoniak bzw. Ammoniumsalz aus dem Rauchgas entfernt wird bzw. werden und anschliessend der pH-Wert des Waschwassers, welches bei der Nass-Wäsche der Rauchgase durch Ammoniak (NH₃) und Ammonium (NH₄) angereichert wird, durch Einführung einer Lauge auf mehr als pH 9,5 angehoben wird, und dass, das im Waschwasser durch die Neutralisation frei gewordene nun physikalisch gelöste Ammoniak (NH₃) aus dem Waschwasser desorbiert wird, dadurch gekennzeichnet, daß das Strippen mit Dampf durchgeführt wird, und das desorbierte Gemisch in die Reduktionszone des Feuerungsanlage eingeleitet wird.

2. Verfahren nach Anspruch 1, dadurch gekennzeichnet, dass das aus dem Waschwasser desorbierte Gemisch Wasserdampf/Ammoniak kondensiert wird und als Salmiakgeist in die Reduktionszone der Feuerungsanlage eingeleitet wird.

3. Verfahren nach Anspruch 1, dadurch gekennzeichnet, dass zur Entfernung des Ammoniak (NH₃) aus dem Waschwasser als Lauge Kalkmilch (Ca(OH)₂) in das Waschwasser eingeführt wird.

4. Verfahren nach Anspruch 2, dadurch gekennzeichnet, dass der aus dem Waschwasser anfallende Salmiakgeist an derjenigen Stelle der Feuerungsanlage eingeleitet wird, an welcher frischer Salmiakgeist unter gleichzeitiger Verringerung seiner Menge entsprechend dem aus dem Waschwasser gewonnenen Salmiakgeist zudosiert wird.

5. Verfahren nach Anspruch 2, dadurch gekennzeichnet, dass der Salmiakgeist an einer Stelle der Feuerungsanlage eingeleitet wird, an welcher die Temperatur unter 1000°C liegt.

6. Feuerungsanlage mit einem Ofen (1), einem Kessel (2) und einer Nass-Waschanlage (6) zur Rückgewinnung von Ammoniak (NH₃) beim Abscheiden von Stickoxyden (NOₓ) aus der bei der Verbrennung von fossilen Brennstoffen und andern Materialien entstehenden Rauchgase, wobei eine der Zuleitung (3) nachgeschaltete Nass-Waschanlage (6) durch eine Verbindungsleitung (10) mit einer Strippkolonne (11) verbunden ist, dadurch gekennzeichnet, dass im Ofen (1) bzw. im Kessel (2) oder in der Austrittsleitung (5) des Kessels (2) eine Zuleitung (3) zur Einleitung von Salmiakgeist (wässrige Lösung von NH₃) in den Rauchgasstrom vorgesehen ist, wobei in der Strippkolonne (11) eine Dampfzuleitung (15) mündet und eine Austrittsleitung (16) für ein Gemisch Wasserdampf/Ammoniak angeschlossen ist, wobei die Austrittsleitung in die Zuleitung (3) mündet.

7. Feuerungsanlage nach Anspruch 6, dadurch gekennzeichnet, dass in der Austrittsleitung (16) zwischen der Strippkolonne (11) und der Zuleitung (3) zur Einleitung von Salmiakgeist in dem Ofen ein Kondensator (17) eingeschaltet ist.

## Claims

1. Method for the recovery of ammonia in the separation of oxides of nitrogen (NOₓ) from the flue gases which develop during the combustion of materials, in particular of fossil fuels, in a furnace installation, in which ammonia (NH₃) is introduced in a reaction zone in the flue gas stream by means of which ammonia, the nitrogen oxide gases are reduced to elemental nitrogen (N₂), whereupon the flue gas stream is subjected to a wet wash which is carried out after the reaction phase, with the non-reacted ammonia and/or ammonium salt being removed from the flue gas by means of the wash water and the pH-value of the wash water, which is enriched by ammonia (NH₃) and ammonium (NH₄) in the wet wash of the flue gases, subsequently being raised as a result of introduction of an alkaline solution to more than pH 9.5 and the now physically dissolved ammonia (NH₃) which has become free in the wash water as a result of the neutralization being desorbed from the wash water, characterised in that the stripping is carried out with steam and the desorbed mixture is introduced into the reduction zone of the furnace installation.

2. Method according to claim 1, characterised in that the steam/ammonia mixture which is desorbed from the wash water is condensed and is introduced as ammonia solution into the reduction zone of the furnace installation.

3. Method according to claim 1, characterised in that milk of lime (Ca(OH)₂) is introduced, as an alkaline solution, into the wash water for removing the ammonia (NH₃) from the wash water.

4. Method according to claim 2, characterised in that the ammonia solution yielded from the wash water is introduced at that point of the furnace installation at which fresh ammonia solution is dosed in with simultaneous reduction in its quantity corresponding to the ammonia solution obtained from the wash water.

5. Method according to claim 2, characterised in that the ammonia solution is introduced at a point of the furnace installation at which the temperature lies below 1000°C.

6. Furnace installation having a furnace (1), a boiler (2) and a wet washing installation (6) for the recovery of ammonia (NH₃) in the separation of oxides of nitrogen (NOₓ) from the flue gases which develop during the combustion of fossil fuels and other materials, with a wet washing installation (6), connected downstream of the feed line (3), being connected by means of a connecting line (10) with a stripping column (11), characterised in that, provided in the furnace (1) or in the boiler (2) respectively or in the outlet line (5) of the boiler (2), there is a feed line (3) for the introduction of ammonia solution (aqueous solution of NH₃) into the flue gas current, wherein a steam feed line (15) opens in the stripping column (11) and an outlet line (16) is connected thereto for a steam/ammonia mixture, with the outlet line opening into the feed line (3).

7. Furnace installation according to claim 6, characterised in that a condenser (17) is connected into the outlet line (16) between the stripping column (11) and the feed line (3) for the introduction of ammonia solution in the furnace.

## Revendications

1. Procédé de récupération d'ammoniac lors de la séparation d'oxydes d'azote (NOₓ) des gaz de fumée se produisant lors de la combustion de matériaux, en particulier de combustibles fossiles, dans une installation de chauffage, dans lequel de l'ammoniac (NH₃), par lequel les gaz d'oxydes d'azote sont réduits en azote élémentaire (N₂), est introduit dans le flux des gaz de fumée, dans une zone de réaction, après quoi le flux des gaz de fumée est soumis à un lavage par voie humide, qui est réalisé après la phase de réaction, dans lequel l'eau de lavage élimine des gaz de fumée, l'ammoniac n'ayant pas réagi ou le sel d'ammonium et ensuite le pH de l'eau de lavage, qui lors du lavage par voie humide des gaz de fumée est enrichie par l'ammoniac (NH₃) et l'ammonium (NH₄), est relevé à plus de 9,5 de pH par introduction d'une lessive, et l'ammoniac (NH₃), libéré dans l'eau de lavage par la neutralisation et dissout physiquement, est désorbé de l'eau de lavage, caractérisé en ce que le stripage est réalisé à la vapeur et le mélange désorbé est introduit dans la zone de réduction de l'installation de chauffage.

2. Procédé selon la revendication 1, caractérisé en ce que le mélange vapeur d'eau/ammoniac, désorbé de l'eau de lavage, est condensé et est introduit, en tant que solution ammoniacale, dans la zone de réduction de l'installation de chauffage.

3. Procédé selon la revendication 1, caractérisé en ce que pour éliminer l'ammoniac (NH₃) de l'eau de lavage on introduit, comme lessive, du lait de chaux (Ca(OH)²) dans l'eau de lavage.

4. Procédé selon la revendication 2, caractérisé en ce que la solution ammoniacale, provenant de l'eau de lavage, est introduite dans l'installation de chauffage au point où une solution ammoniacale fraîche est ajoutée, de manière dosée, par réduction simultanée de sa quantité, en fonction de la solution ammoniacale extraite de l'eau de lavage.

5. Procédé selon la revendication 2, caractérisé en ce que la solution ammoniacale est introduite dans l'installation de chauffage en un point où la température est inférieure à 1 000 °C.

6. Installation de chauffage comportant un four (1), une chaudière (2) et une installation de lavage par voie humide (6) pour la récupération d'ammoniac (NH₃) lors de la séparation d'oxydes d'azote (NOₓ) des gaz de fumée produits par la combustion de combustibles fossiles et d'autres matériaux, dans laquelle une installation de lavage par voie humide (6), située en aval de la conduite d'arrivée (3) est reliée par une conduite de liaison (10) avec une colonne de stripage (11), caractérisée en ce que dans le four (1) ou la chaudière (2) ou dans la conduite de sortie (5) de la chaudière (2), il est prévu une conduite d'arrivée (3) destinée à introduire une solution ammoniacale (solution aqueuse NH₃) dans le flux des gaz de fumée, une conduite d'arrivée de vapeur (15) débouchant dans la colonne de stripage (11) et une conduite de sortie (16) pour un mélange vapeur d'eau/ammoniac étant raccordée à la conduite de sortie débouchant dans la conduite d'arrivée (3).

7. Installation de chauffage selon la revendication 6, caractérisée en ce qu'un condensateur (17) est monté dans la conduite de sortie (16), entre la colonne de stripage (11) et la conduite d'arrivée (3), pour l'introduction d'une solution ammoniacale dans le four.
